# EUROPÄISCHE PATENTANMELDUNG

(11) **EP 3 597 427 A2**
(43) Veröffentlichungstag der Anmeldung: **22.01.2020**
(21) Anmeldenummer: 19172811.2
(22) Anmeldetag: 06.05.2019
(51) Int. Cl.: B32B 41/00, B32B 37/18, B32B 38/18, B65H 15/00

(54) **ARBEITSVERFAHREN UND VORRICHTUNG ZUR ZUFÜHRUNG VON BESCHICHTUNGSBÖGEN AUF EINE FÖRDERSTRECKE**

(30) Priorität: 19.07.2018 DE 102018117469
(71) Anmelder: Wemhöner Surface Technologies GmbH & Co. KG, 32052 Herford (DE)
(72) Erfinder: Riemen, Klaus, 33790 Halle (Westf.) (DE); Niedermaier, Thomas, 32130 Enger (DE); Berghahn, Uwe, 32760 Detmold (DE); Hageböke, Frank, 32339 Espelkamp (DE); Barth, Florian, 32130 Enger (DE)
(74) Vertreter: Rolf, Gudrun

(57) **Zusammenfassung**

Es werden ein Arbeitsverfahren und eine Vorrichtung zur Zuführung von Beschichtungsbögen (1) auf eine Förderstrecke (2) für aus mindestens zwei Schichten darauf zusammengelegter und in einer nachgeschalteten Beschichtungspresse (3) zu verpressenden Werkstückstapel zur Verfügung gestellt, die es ermöglichen, einer Beschichtungspresse (3) innerhalb deren Pressenzyklus zeitverlustlos fertige Werkstückstapel zur Verfügung stellen zu können, was dadurch erzielt wird, dass während eines Pressenzyklus ein oberer und ein unterer Beschichtungsbogen (1) nacheinander von einem gemeinsamen Bogenstapel (4) vereinzelt werden, wobei ein Beschichtungsbogen (1) der Förderstrecke (2) ungewendet und ein anderer daneben in oder entgegen der Förderrichtung (5) bewegt und mit seiner Oberfläche entgegengesetzt der des vorherigen Beschichtungsbogens (1) gewendet und anschließend der Förderstrecke (2) zugeführt wird, wobei bei mehr als zwei Schichten vor und/ oder nach deren Legen über weitere Zuführungen ein weiterer Bogen oder weitere Bögen und/ oder über eine Plattenzuführung (6) zwischendurch eine zu beschichtende Platte auf die Förderstrecke (2) aufgelegt werden.

## Beschreibung

Die Erfindung betrifft ein Arbeitsverfahren und eine Vorrichtung zur Zuführung von Beschichtungsbögen auf eine Förderstrecke für aus mindestens zwei Schichten darauf zusammengelegten und in einer nachgeschalteten Beschichtungspresse hintereinander zu verpressenden Werkstückstapel gemäß den Oberbegriffen der Ansprüche 1 und 8.

Bei der beidseitigen Plattenbeschichtung mit Bogenware müssen die auf Bogenstapeln gestapelten Beschichtungsbögen vereinzelt werden, wobei auf einer Förderstrecke mindestens ein Beschichtungsbogen unter und mindestens ein Beschichtungsbogen von auf eine Platte aufgelegt wird. Da diese Beschichtungsbögen gewöhnlich allerdings nur auf einer Seite mit einem Dekor versehen sind, muss hierzu jeder zweite Beschichtungsbogen gewendet werden. Gleiches gilt wenn nur zwei Beschichtungsbögen miteinander verpresst werden sollen.

Hierfür ist eine Vorrichtung und ein Verfahren zum Separieren und Wenden von auf einem Bogenstapel bevorrateten Einzelbögen bekannt, EP 3 028 968 B1, bei denen die Beschichtungsbögen von Saughebern eines Saugrahmens abgehoben und gewendet werden können, wobei jeder Einzelbogen anschließend auf die horizontale Arbeitshöhe einer Ziehleiste bewegt und von dieser auf eine Förderstrecke gezogen werden kann.

Nachteilig an dieser bekannten Technik ist jedoch, dass sie nicht die Zykluszeiten einer als Kurztaktpresse ausgebildeten Beschichtungspresse erreichen kann, sodass bei jedem Zusammenlegungsvorgang eines zu verpressenden Werkstückstapels ein unerwünschter Zeitverlust auftritt.

Aufgabe der Erfindung ist es, ein Arbeitsverfahren und eine Vorrichtung zur Verfügung zu stellen, die es ermöglichen, einer Kurztaktpresse mindestens innerhalb deren Pressenzyklus ohne Zeitverlust fertig zusammengelegte und zu verpressende Werkstückstapel zur Verfügung stellen zu können.

Die Lösung dieser Aufgabe erfolgt in Verbindung mit den Merkmalen der Oberbegriffe der Ansprüche 1 und 8 erfindungsgemäß aus deren kennzeichnenden Teilen, wobei bei dem Arbeitsverfahren während eines Pressenzyklus einer als Kurztaktpresse ausgebildeten Beschichtungspresse ein oberer und ein unterer mit einem einseitigen Dekor versehender Beschichtungsbogen nacheinander von einem gemeinsamen Bogenstapel vereinzelt werden, jeweils ein Beschichtungsbogen unmittelbar der Förderstrecke ungewendet zugeführt wird und ein anderer Beschichtungsbogen neben der Förderstrecke in oder entgegen deren Förderrichtung bewegt und mit seiner Oberfläche entgegengesetzt der Oberfläche des vorherigen Beschichtungsbogens gewendet und anschließend der Förderstrecke zugeführt wird. Bei mehr als zwei Schichten werden vor und/ oder nach dem Legen des unteren und/ oder vor und/ oder nach dem Legen des oberen Beschichtungsbogens (1) über weitere Zuführungen ein weiterer Bogen oder weitere Bögen und/ oder über eine Plattenzuführung (6) zwischendurch mindestens eine zu beschichtende Platte auf die Förderstrecke (2) aufgelegt.

Mit einer Entnahmevorrichtung werden also pro Pressenzyklus, der etwa 16 Sekunden betragen kann, zwei Beschichtungsbögen von einem gemeinsamen Bogenstapel vereinzelt, wobei jedoch jeder zweite Bogen parallel zur Förderstrecke versetzt, gewendet und auf einer parallelen Bewegungsachse der Förderstrecke zugeführt wird. Durch diese Parallelverschiebung wird das Verfahren aufgesplittet, sodass für die einzelnen Verfahrensschritte mehr Zeit zur Verfügung steht.

Diese Vorrichtung, insbesondere aber dieses Arbeitsverfahren, liefern als weiteren Vorteil, dass weniger Lagerfläche für bereitzuhaltendes Beschichtungsmaterial benötigt wird, da keine zwei separate Bogenstapel, etwa auf separaten Filmpaletten, vorgehalten werden müssen, ebenso wie Kleinserien deutlich günstiger hergestellt werden können, da jeweils nur noch ein Reststapel mit Beschichtungsmaterial gelagert werden muss, sodass die erforderliche Lagerkapazität deutlich verringert wird.

Ein weiterer Vorteil besteht darin, dass durch das Aufsplitten des Arbeitsverfahrens in verschiedene räumliche Stationen der eigentliche Wendevorgang sogar langsamer durchgeführt werden kann als bei bekannten Verfahren des Standes der Technik, sodass die Gefahr einer Beschädigung der Beschichtungsbögen dadurch wesentlich abgesenkt wird. Der ganz besondere Vorteil dieses erfinderischen Arbeitsverfahren und der ebensolchen Vorrichtung liegt jedoch darin, dass die Beschichtungspresse nicht mehr durch den Zusammenlegeprozess ausgebremst wird, wodurch sich die Wirtschaftlichkeit der Herstellung insgesamt deutlich verbessert.

Vorteilhafte Ausgestaltungen des Gegenstandes der Erfindung ergeben sich mit und in Kombination aus den den Ansprüchen 1 und 8 nachfolgenden Unteransprüchen.

Entsprechend einem besonders bevorzugten Arbeitsschritt des Arbeitsverfahren wird ein ungewendeter Beschichtungsbogen von einer Ziehvorrichtung einer ersten Station auf die Förderstrecke gefördert und der gewendete Beschichtungsbogen von einer weiteren, benachbart daneben oder davon beabstandeten weiteren Ziehvorrichtung einer zweiten Station auf die Förderstrecke gefördert, wobei beide Ziehvorrichtungen rechtwinklig zur Förderrichtung der Förderstrecke auf parallel zueinander verlaufenden und voneinander unabhängigen Bewegungsachsen arbeiten.

Dieser grundsätzliche Ablauf des Arbeitsverfahrens lässt sich durch unterschiedliche vorteilhafte Ausführungsformen der erforderlichen Vorrichtung weiter optimieren, beispielsweise dadurch, dass die Beschichtungsbögen von einer gemeinsamen Ziehleiste als Abnahmevorrichtung vom Bogenstapel vereinzelt abgenommen und auf einen Übergabe- oder Fördertisch abgelegt werden, wobei dann nur die zu wendenden Beschichtungsbögen von einer Transfervorrichtung mit einem Saugrahmen aufgenommen und zu einer Wendevorrichtung verschoben und dort auf einem Legetisch abgelegt werden, wobei der gesamte Legetisch um eine seitliche, zur Förderstrecke parallele Schwenkachse herum gewendet wird, wo die Bogenstapel von der zweiten Ziehvorrichtung ergriffen werden können.

Bei einer anderen vorteilhaften Ausführungsform des Verfahrens werden die zu wendenden Beschichtungsbögen von einer Transfervorrichtung mit einem Saugrahmen von dem Übergabe- oder Fördertisch abgenommen, wobei der Saugrahmen während seines seitlichen Verschiebens um seine Längsachse gewendet wird, sodass der gewendete Beschichtungsbogen sofort an die zweite Ziehvorrichtung übergeben werden kann.

Gemäß einer anderen vorteilhaften Ausführungsform des Arbeitsverfahrens ist der erste Übergabe- oder Fördertisch mit einem Förderband ausgestattet, welches den Beschichtungsbogen zu einer Wendevorrichtung befördert, wo er um 180° gedreht und anschließend auf der Bewegungsachse der zweiten Ziehvorrichtung auf die Förderstrecke gezogen werden kann.

Bei einer weiteren vorteilhaften Ausgestaltung des Arbeitsverfahrens wird der Übergabe- oder Fördertisch um eine zu den Bewegungsachsen der Ziehvorrichtung parallele und dazwischen angeordnete Schwenkachse verschwenkt und dabei gleichzeitig seitlich in oder entgegen der Förderrichtung der Förderstrecke bewegt, sodass ein Beschichtungsbogen auch hier sofort in gewendeter Version von der Ziehvorrichtung ergriffen werden kann.

Nachfolgend wird die Vorrichtung anhand von Figuren näher beschrieben. Es zeigen:
- Fig. 1: eine schematische Draufsicht auf eine erste Vorrichtung zur Zuführung von Beschichtungsbögen auf eine Förderstrecke,
- Fig. 2: eine zweite Ausführungsvariante einer solchen Vorrichtung, und
- Fig. 3: eine dritte Variante einer solchen Vorrichtung.

Die Vorrichtung zur Durchführung des Arbeitsverfahrens zur Zuführung von Beschichtungsbögen 1 auf eine Förderstrecke 2 für aus mindestens zwei Schichten darauf zusammengelegten und in einer nachgeschalteten Beschichtungspresse 3 miteinander zu verpressenden Werkstückstapel besteht im Wesentlichen aus der Förderstrecke 2, die die darauf nacheinander zugeführten und in Förderrichtung 5 weiterbewegten Beschichtungsbögen 1 und Platten zu einem aufgeschichteten Werkstückstapel zu der als Kurztaktpresse ausgebildeten Beschichtungspresse 3 befördert.

Eine solche Beschichtungspresse kann beispielsweise einen Pressenzyklus von etwa 16 Sekunden aufweisen und muss daher alle 16 Sekunden mit einem entsprechend fertig zusammengelegten Werkstückstapel beschickt werden können. Dies gelingt dadurch, dass die Vorrichtung eine gemeinsame Entnahmestelle mit einem einzelnen Bogenstapel 4 von oberen und unteren Beschichtungsbögen 1 aufweist sowie eine erste Ziehleiste 11 als Entnahmevorrichtung von Beschichtungsbögen 1 von dem Bogenstapel 4 auf einen Übergabe- oder Fördertisch 12. Weiterhin besitzt sie zwei benachbart angeordnete, auf separaten und parallel zueinander angeordneten Bewegungsachsen 9;10 angeordnete Ziehvorrichtungen 7;8 als separate Stationen sowie eine Transfer- und Wendevorrichtung für jeden zweiten auf dem Übergabe- oder Fördertisch 12 aufgelegten Beschichtungsbogen 1, sodass mit den beiden Ziehvorrichtungen 7;8 kurz hintereinander jeweils gewendete und ungewendete Beschichtungsbögen 1 auf die Förderstrecke 2 förderbar sind.

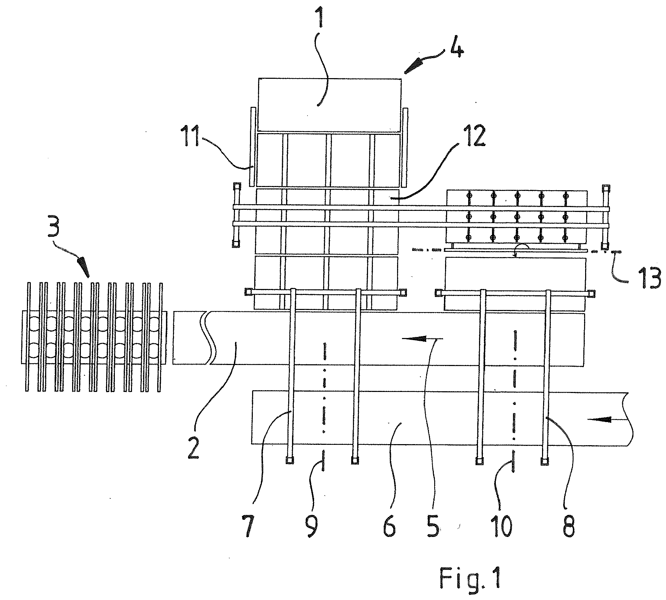

Die Transfer- und Wendevorrichtungen können dabei unterschiedlich ausgebildet sein. Die Transfervorrichtung kann etwa, wie in Fig. 1 dargestellt ist, aus einem parallel der Förderstrecke bewegbaren Saugrahmen bestehen, der den zu wendenden Beschichtungsbogen 1 auf einem weiteren seitlichen Tisch ablegt, welcher um eine seitliche Schwenkachse 13, die zur Förderrichtung 5 der Förderstrecke 2 parallel liegt, um 180° verschwenkbar ist, sodass der darauf aufliegende Beschichtungsbogen 1 der zweiten Ziehvorrichtung 8 ebenfalls um 180° gewendet übergeben werden kann.

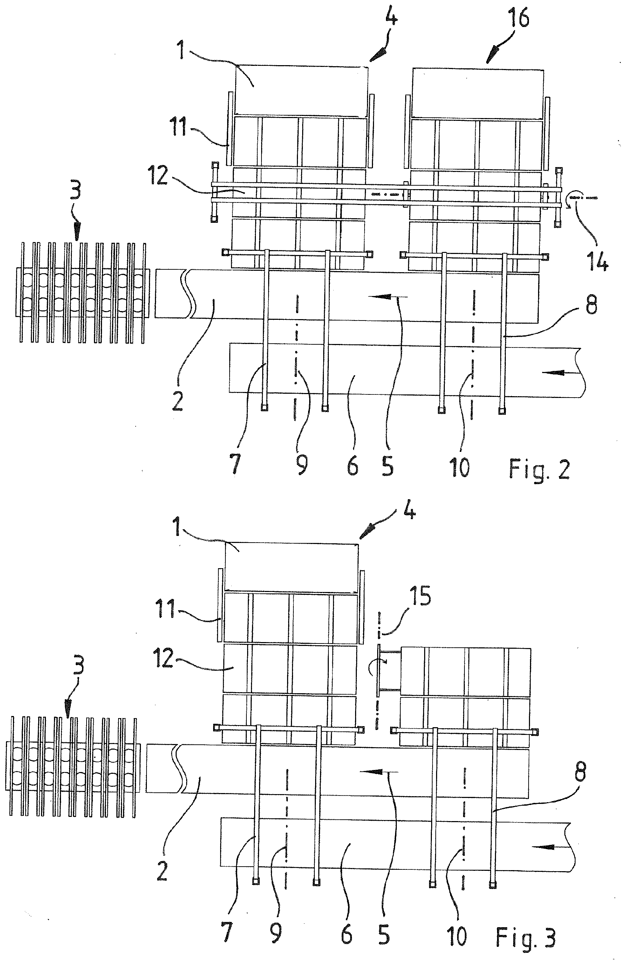

Bei einer Vorrichtung wie sie in Fig. 2 dargestellt ist, kann der Saugrahmen zusätzlich zu seiner Transfervorrichtung um seine Längsachse als Schwenkachse 14 verdreht werden, sodass auch hier die Ziehvorrichtung 8 einen bereits gewendeten Beschichtungsbogen 1 übernehmen und auf die Förderstrecke 2 herüberziehen kann.

In der Fig. 2 rechts oben ist noch ein weiterer Bogenstapel 16 für etwaige Deck- oder Zwischenschichten weiterer Bögen angeordnet, sodass ein Werkstückstapel auch aus unterschiedlichen Schichten von Beschichtungsbögen bestehen kann, wobei Übersetzvorrichtungen für Platten, die von der parallel der Förderstrecke 2 angeordneten Plattenzuführung 6 zugeführt werden, nicht separat dargestellt aber gemeinsam an den Portalen der Ziehvorrichtungen 7;8 mit vorgesehen sind.

Bei einer weiteren Version einer Transfer- und Wendevorrichtung, wie sie in Fig. 3 dargestellt ist, weist der Übergabe- oder Fördertisch 12 eine seitliche, senkrecht zur Förderrichtung 5 der Förderstrecke 2 verlaufende Schwenkachse 15 auf, um die er während eines Wendevorganges verschwenkbar ist und dabei gleichzeitig einen um 180° verschwenkten Beschichtungsbogen 1 in oder entgegen der Bewegungsrichtung der Förderstrecke 2 verschwenkt und anschließend von der Ziehvorrichtung 8 auf die Förderstrecke 2 gefördert werden kann.

Die zweite Station mit der zweiten Ziehvorrichtung für gewendete Beschichtungsbögen 1 ist in den Figuren jeweils in Förderrichtung 5 der Förderstrecke 2 vor der Station mit der Ziehvorrichtung für ungewendete Beschichtungsbögen 1 dargestellt, sie könnte jedoch auch in Förderrichtung 5 der Förderstrecke 2 hinter dieser Station angeordnet sein. Wenn es egal sein soll, in welcher Position die Beschichtungsbögen 1 auf dem Bogenstapel 4 angeordnet sind, könnte auch eine dritte Station seitlich der ersten Station mit den ungewendet überziehbaren Beschichtungsbögen 1 angeordnet sein. Diese könnte dann mit einem dritten Bogenstapel für weitere Deck- oder Zwischenschichten aus weiteren Deck- oder Zwischenbögen ausgestattet sein.

## Patentansprüche

1. Arbeitsverfahren zur Zuführung von Beschichtungsbögen (1) auf eine Förderstrecke (2) für aus mindestens zwei Schichten darauf zusammengelegter und in einer nachgeschalteten Beschichtungspresse (3) miteinander zu verpressenden Werkstückstapel, **dadurch gekennzeichnet, dass** während eines Pressenzyklus einer als Kurztaktpresse ausgebildeten Beschichtungspresse (3) ein oberer und ein unterer, mit einem einseitigen Dekor versehender Beschichtungsbogen (1) nacheinander von einem gemeinsamen Bogenstapel (4) vereinzelt werden, wobei ein Beschichtungsbogen (1) der Förderstrecke (2) ungewendet zugeführt wird und ein anderer Beschichtungsbogen (1) neben der Förderstrecke (2) in oder entgegen der Förderrichtung (5) in Richtung der Beschichtungspresse (3) bewegt und mit seiner Oberfläche entgegengesetzt der Oberfläche des vorherigen Beschichtungsbogens (1) gewendet und anschließend der Förderstrecke (2) zugeführt wird und dass bei mehr als zwei Schichten vor und/ oder nach dem Legen des unteren und/ oder des oberen Beschichtungsbogens (1) über weitere Zuführungen ein weiterer Bogen oder weitere Bögen und/ oder über eine Plattenzuführung (6) zwischendurch mindestens eine zu beschichtende Platte auf die Förderstrecke (2) aufgelegt wird oder werden.

2. Arbeitsverfahren nach Anspruch 1, **dadurch gekennzeichnet, dass** der ungewendete Beschichtungsbogen (1) von einer Ziehvorrichtung (7) auf die Förderstrecke (2) gefördert wird und der gewendete Beschichtungsbogen (1) von einer weiteren, benachbart daneben oder davon beabstandeten weiteren Ziehvorrichtung (8) auf die Förderstrecke (2) gefördert wird.

3. Arbeitsverfahren nach Anspruch 2, **dadurch gekennzeichnet, dass** die beiden Ziehvorrichtungen (7;8) rechtwinklig zur Förderrichtung (5) der Förderstrecke (2) auf parallel zueinander verlaufenden Bewegungsachsen (9;10) arbeiten.

4. Arbeitsverfahren nach einem der vorgenannten Ansprüche, **dadurch gekennzeichnet, dass** die Beschichtungsbögen (1) von einer Ziehleiste (11) als Abnahmevorrichtung vom Bogenstapel (4) vereinzelt abgenommen und auf einen Übergabe- oder Fördertisch (12) abgelegt werden, wobei die zu wendenden Beschichtungsbögen (1) von einer Transfervorrichtung mit Saugrahmen dort aufgenommen und zu einer Wendevorrichtung verschoben und dort abgelegt und der gesamte Legetisch um eine seitliche parallele Schwenkachse (13) gewendet wird, woraufhin der gewendete Beschichtungsbogen (1) von der Ziehvorrichtung (8) ergriffen wird.

5. Arbeitsverfahren nach einem der vorgenannten Ansprüche 1 bis 3, **dadurch gekennzeichnet, dass** die Beschichtungsbögen (1) von einer Ziehleiste (11) als Abnahmevorrichtung vom Bogenstapel (4) vereinzelt abgenommen und auf einem Übergabe- oder Fördertisch (12) abgelegt werden, wobei die zu wendenden Beschichtungsbögen (1) dort von einer Transfervorrichtung mit einem Saugrahmen abgenommen werden, der während des Verschiebens um seine Längsachse gewendet wird und den Beschichtungsbogen (1) gewendet an die Ziehvorrichtung (8) übergibt.

6. Arbeitsverfahren nach einem der vorgenannten Ansprüche 1 bis 3, **dadurch gekennzeichnet, dass** die Beschichtungsbögen (1) von einer Ziehleiste (11) als Abnahmevorrichtung vom Bogenstapel (4) vereinzelt abgenommen und auf einem Übergabe- oder Fördertisch (12) abgelegt werden, wobei der Übergabe- oder Fördertisch eine zu den Bewegungsachsen (9;10) der Ziehvorrichtungen (7;8) parallel dazwischen angeordnete Schwenkachse (15) aufweist und einen Beschichtungsbogen (1) um die Schwenkachse (15) herum verschwenkt, der anschließend von der Ziehvorrichtung (8) ergriffen wird.

7. Arbeitsverfahren nach einem der vorgenannten Ansprüche 1 bis 3, **dadurch gekennzeichnet, dass** die Beschichtungsbögen (1) von einer Ziehleiste (11) als Abnahmevorrichtung vom Bogenstapel (4) vereinzelt abgenommen und auf einem Übergabe- oder Fördertisch (12) abgelegt werden, wobei der Übergabe- oder Fördertisch (12) ein Förderband aufweist, welches den Beschichtungsbogen (1) zu einer Wendevorrichtung befördert, wo er gewendet und von der Ziehvorrichtung (8) ergriffen wird.

8. Vorrichtung zur Zuführung von Beschichtungsbögen (1) auf eine Förderstrecke (2) für aus mindestens zwei Schichten darauf zusammengelegten und in einer nachgeschalteten Beschichtungspresse (3) miteinander zu verpressenden Werkstückstapel, **dadurch gekennzeichnet, dass** die Vorrichtung eine gemeinsame Entnahmestelle mit einem einzelnen Bogenstapel (4) von oberen und unteren Beschichtungsbögen (1) aufweist sowie eine erste Ziehleiste (11) als Entnahmevorrichtung von Beschichtungsbögen (1) von dem Bogenstapel (4) auf einen Übergabe- oder Fördertisch (12) und dass die Vorrichtung benachbart zwei weitere Ziehleisten (7;8) aufweist, sowie eine Transfer- und eine Wendevorrichtung für jeden zweiten auf dem Übergabe- oder Fördertisch (12) aufgelegten Beschichtungsbogen (1) und dass mit beiden Ziehleisten (7;8) jeweils gewendete und ungewendete Beschichtungsbögen (1) auf die Förderstrecke (2) förderbar sind.

9. Vorrichtung nach Anspruch 8, **dadurch gekennzeichnet, dass** die benachbarten Ziehleisten (7;8) zueinander parallele Bewegungsachsen (9;10) aufweisen.

10. Vorrichtung nach Anspruch 9, **dadurch gekennzeichnet, dass** die Bewegungsachsen (9;10) senkrecht zu einer Förderrichtung (5) der Förderstrecke (2) angeordnet sind.

11. Vorrichtung nach Anspruch 8, **dadurch gekennzeichnet, dass** die Transfervorrichtung aus einem parallel der Förderstrecke (2) bewegbaren Saugrahmen oder einem Förderband besteht.

12. Vorrichtung nach Anspruch 11, **dadurch gekennzeichnet, dass** der Saugrahmen um eine zur Förderstrecke (2) parallele Drehachse (13) verschwenkbar und zusätzlich als Wendevorrichtung ausgebildet ist.

13. Vorrichtung nach Anspruch 8, **dadurch gekennzeichnet, dass** der Übergabe- oder Fördertisch (12) eine seitliche, senkrecht zur Förderrichtung (5) verlaufende Schwenkachse (15) aufweist, um die er als Wendevorrichtung verschwenkbar ist und die gleichzeitig als Transfervorrichtung ausgebildet ist.

14. Vorrichtung nach Anspruch 8, **dadurch gekennzeichnet, dass** sie einen oder mehrere weitere Bogenstapel (16) und weitere Ziehleisten zur Zuführung weiterer Zwischenbögen auf die Förderstrecke (2) aufweist.
